# EUROPEAN PATENT APPLICATION

(11) **EP 4 708 037 A1**
(43) Date of publication of application: **11.03.2026**
(21) Application number: 25200990.7
(22) Date of filing: 09.09.2025
(51) Int. Cl.: G06F 9/38

(54) **PROCESSING VECTOR INSTRUCTIONS**

(30) Priority: 10.09.2024 GB 202413288
(71) Applicant: Imagination Technologies Limited, Kings Langley Hertfordshire WD4 8LZ (GB)
(72) Inventor: VRABEL, Peter, Kings Langley, WD4 8LZ (GB); SRIVATHSA, Sudheendra, Kings Langley, WD4 8LZ (GB); HOPTON, Selina, Kings Langley, WD4 8LZ (GB); YEOH, Kenny, Kings Langley, WD4 8LZ (GB)
(74) Representative: Page White Farrer

(57) **Abstract**

A handshaking protocol is implemented between a control unit, a vector processing unit (VPU) and a load-store unit (LSU). Micro-ops of an instruction will only be executed by the LSU if it is guaranteed not to generate an exception and no earlier micro-ops will generate an exception. The handshaking protocol guarantees this using signals passed between the control unit, VPU and LSU.

To be accompanied, when published, by Figure 2 of the accompanying drawings.

## Description

### CROSS-REFERENCE TO RELATED APPLICATION

This application claims priority from UK patent application GB2413288.8 filed on 10 September 2024, which is herein incorporated by reference in its entirety.

### TECHNICAL FIELD

The present disclosure relates to the processing of instructions by a processing system, and in particular processing load-store instructions by a vector processing unit of a processing system.

### BACKGROUND

A vector processing unit (VPU) is responsible for executing vector instructions and scalar floating-point instructions, which may include cryptographic instructions. The VPU receives decoded instructions from a central unit (e.g. a main pipeline control (MPC)) and then executes the instructions. Execution is primarily performed by reading the vector or floating point register files, sending the data through a vector data path, and then writing the result back to the vector or floating point register file.

VPUs perform complicated arithmetic operations and can operate on large amounts of data at the same time. Load-store units (LSUs) read and write data from and to memory. A load-store (LS) instruction may be split into several smaller micro-operations (micro-ops), each of which may read from and/or write to memory.

Some instructions, when processed, generate exceptions. Here, an "exception" is an unexpected event that causes a change in which instructions should be executed. Whether an instruction will have an exception may depend on architectural state of the VPU (e.g. LMUL) or the processing system containing the VPU. For performance reasons, it is preferable to start executing the micro-ops as soon as possible. However, certain things must happen before the micro-ops can execute. For example, a micro-op should only be permitted to store data to memory if the micro-op(s) of a previous instruction executed and there was no exception.

Some exceptions cause software-observable side effects. Side effects do not modify architectural state but can allow observers (e.g. attackers) to infer information about (sensitive) data (e.g. where the data is stored). Examples of such software-observable side effects include modifying cache state and performing page walks. Therefore, the LSU should not move data in and out of memory until it is safe to do so.

### SUMMARY

This Summary is provided merely to illustrate some of the concepts disclosed herein and possible implementations thereof. Not everything recited in the Summary section is necessarily intended to be limiting on the scope of the disclosure. Rather, the scope of the present disclosure is limited only by the claims.

Normally, instructions are split into micro-ops by the main pipeline control (MPC) and executed in order. Such a pipeline needs dedicated logic to ensure that micro-ops do not perform actions before they are allowed to. However, because the pipeline tracks all the micro-ops in order, and is aware of which micro-ops belong to which instructions, the logic is straightforward to implement.

However, it is beneficial to be able to send micro-ops out-of-order. In some processing systems, the VPU is responsible for the splitting of an instruction into its micro-ops. This is more efficient as certain micro-ops can be skipped (e.g. based on architectural state of the processing system) and/or the splitting can be done later when confirmed that it is needed.

In this case, if any micro-op faults, no following micro-op should be allowed to update architectural state. Therefore when micro-ops are sent to the LSU, the LSU must check if the micro-op has an exception. If so, the LSU must tell the VPU. This is complicated by the issue that the LSU is not aware that micro-ops may be part of the same instruction, meaning the LSU does not know if the micro-ops relating to the same instruction have already got an exception and therefore should not be executed.

The present invention provides a 'handshaking protocol' between a control unit (e.g. an MPC) which is configured to send LS instructions to a VPU, the VPU which is configured to split LS instructions into LS micro-ops, and the LSU which is configured to execute LS micro-ops.

According to the handshaking protocol, the control unit must send an allow signal for the instruction to the VPU before the VPU can perform actions which have software-observable changes. The control unit only sends the allow signal when it has determined that there are no reasons internal to the control unit that should prevent the instruction from making architectural updates.

When an allow signal is received for an instruction, the VPU sends an allow signal to the LSU for each micro-op split from that instruction. A micro-op must not make software-observable changes before getting an allow signal. That is, a micro-op of a LS instruction may only perform actions with software-observable side effects if the parent instruction (i.e. the instruction that was split into the micro-ops) was allowed by the control unit, and if an allow signal for the micro-op has been routed to the LSU.

The LSU checks each micro-op that it receives from the VPU to determine whether any of the micro-ops (and consequently, the parent instruction) will have an exception. Whether any micro-op will have an exception is fed back to the VPU. The VPU co-ordinates whether the micro-ops from the allowed instruction can update state. A micro-op can only update state if an allow signal has been sent, and no previous micro-op of the instruction has an exception. For each allowed micro-op that does not have an exception and no previous micro-op has an exception, the VPU sends a commit signal to the LSU. This allows the LSU to execute the micro-op and perform actions such as, for example, writing data to memory, reading non-idempotent memory, and updating page tables.

The VPU may pass on the exception information to the control unit. For example, if none of the micro-ops will generate an exception, the VPU may sends a 'no-exception' signal to the control unit. On the other hands, if a micro-op does get an exception, the LSU may inform the control unit by sending an 'exception status' message to the VPU. If an instruction did have an exception, the VPU tells the control unit which part of the instruction had the exception. If an instruction gets an exception, the control unit will perform one or more actions such as, for example, update architectural state (e.g. control and status registers (CSRs) in RISC-V systems) with information about the type and location of the exception, preventing younger instructions from updating architectural state, and telling the fetch unit to start executing the exception handler.

The VPU may also track which micro-ops have been committed and inform the control unit.

According to an aspect disclosed herein, there is provided a computer-implemented method of processing instructions by a processing system. The processing system comprises a control unit, a vector processing unit (VPU), and a load-store unit (LSU). The method comprises, for a current instruction to be processed, determining, by the control unit, that there are no reasons internal to the control unit that are preventing the current instruction from making architectural updates. In response, the control unit sends, to the VPU, an allow signal associated with the current instruction. The VPU sends, to the LSU, one or more respective micro-operations of the current instruction and one or more respective allow signals associated with the respective micro-operation, wherein the one or more respective micro-operations are sent to the LSU in an order. For each of a set of the one or more respective micro-operations having an associated respective allow signal, the LSU determines whether the respective micro-operation will generate a respective exception, and sends respective exception information to the VPU, the respective exception information indicating whether the respective micro-operation will generate a respective exception. The method further comprises, for each respective micro-operation that has i) an associated respective allow signal, ii) respective exception information indicating that the respective micro-operation will not generate an exception, and iii) no earlier respective micro-operations positioned earlier in the order that has respective exception information indicating that the earlier respective micro-operation will generate an exception, sending, by the VPU to the LSU, a respective commit signal associated with the respective micro-operation. The LSU is configured to only execute a respective micro-operation upon receipt of a respective commit signal.

In embodiments, the method may the LSU executing at least one of the respective micro operations associated with the respective commit signal.

In embodiments, executing the at least one of the respective micro-operations may comprise updating architectural state of the processing system.

In embodiments, updating of the architectural state may comprise one or more of: writing data to memory of the processing system, reading data from non-idempotent memory of the processing system, and updating one or more page tables of the processing system.

In embodiments, the method may comprise assigning an instruction identifier to the current instruction, and using the instruction identifier to associate the allow signal with the current instruction.

In embodiments, the method may comprise assigning a respective micro-operation identifier to each of the one or more respective micro-operations, and using the respective micro-operation identifier to associate the respective allow signal with the respective micro-operation.

In embodiments, the set of the one or more respective micro-operations may comprise each of the one or more respective micro-operations.

In embodiments, the LSU may determine whether the respective micro-operation will generate a respective exception for each respective micro-operation in the order until a respective exception is determined.

In embodiments, the method may comprise, in response to determining that one or more respective micro-operations will generate a respective exception, the VPU sending a signal to the control unit informing the control unit that the current instruction will generate an exception.

In embodiments, the method may comprise sending, by the VPU to the control unit, exception status based on the respective exception information. The exception status either indicates a) that none of the one or more respective micro-operations will generate a respective exception, or b) i) at least one of the one or more respective micro-operation will generate a respective exception, and/or ii) an indication of the respective micro-operation positioned earliest in the order that will generate a respective exception.

In embodiments, the exception status that indicates b) may indicate a type and/or location of each respective exception.

In embodiments, the method may comprise, in response to receiving the exception status that indicates b), the control unit may perform one or more of the following actions: updating one or more registers of the processing system with the exception information; preventing all younger instructions than the current instruction from updating architectural state; and sending a request to an instruction fetch unit of the processing system to start executing an exception handler.

According to another aspect disclosed herein, there is provided a processing system comprising a control unit, a vector processing unit (VPU), and a load-store unit (LSU). The control unit is configured to determine that there are no reasons internal to the control unit that are preventing a current instruction from making architectural updates, and in response send, to the VPU, an allow signal associated with the current instruction. The VPU is configured to send one or more respective micro-operations of the current instruction to the LSU in an order, and to send one or more respective allow signals associated with the respective micro-operation to the LSU. The LSU is configured to determine, for each of a set of the one or more respective micro-operations having an associated respective allow signal, whether the respective micro-operation will generate a respective exception, and send respective exception information to the VPU, the respective exception information indicating whether the respective micro-operation will generate a respective exception. The VPU is configured to send, for each respective micro-operation that has i) an associated respective allow signal, ii) respective exception information indicating that the respective micro-operation will not generate an exception, and iii) no earlier respective micro-operations positioned earlier in the order that has respective exception information indicating that the earlier respective micro-operation will generate an exception, a respective commit signal associated with the respective micro-operation to the LSU. The LSU is configured to only execute a respective micro-operation upon receipt of a respective commit signal associated with the respective micro-operation.

In embodiments, the VPU may be configured to assign an instruction identifier to the current instruction, and use the instruction identifier to associate the allow signal with the current instruction.

In embodiments, the VPU may be configured to assign a respective micro-operation identifier to each of the one or more respective micro-operations, and use the respective micro-operation identifier to associate the respective allow signal with the respective micro-operation.

In embodiments, the VPU may be configured to send a signal to the control unit informing the control unit that the current instruction will generate an exception.

In embodiments, the VPU may be configured to send exception status to the VPU, wherein the exception status is based on the respective exception information, and wherein the exception status either indicates a) that none of the one or more respective micro-operations will generate a respective exception, or b) i) at least one of the one or more respective micro-operation will generate a respective exception, and/or ii) an indication of the respective micro-operation positioned earliest in the order that will generate a respective exception.

In embodiments, the control unit may be configured to perform one or more of the following actions in response to receiving the exception status that indicates b): update one or more registers of the processing system with the exception information; prevent all younger instructions than the current instruction from updating architectural state; and send a request to an instruction fetch unit of the processing system to start executing an exception handler.

According to another aspect disclosed herein, there is provided a computer-implemented handshake protocol for controlling when a vector processing unit (VPU) can perform architectural updates. The protocol comprises sending, from the VPU to a load-store unit (LSU), one or more respective allow signals, each allow signal associated with a respective micro-operation sent to the LSU in an order. The protocol further comprises, for each of a set of the one or more respective micro-operations having an associated respective allow signal, the LSU determining whether the respective micro-operation will generate a respective exception, and sending respective exception information to the VPU. The respective exception information indicates whether the respective micro-operation will generate a respective exception. The protocol further comprises, for each respective micro-operation that has i) an associated respective allow signal, ii) respective exception information indicating that the respective micro-operation will not generate an exception, and iii) no earlier respective micro-operations positioned earlier in the order that has respective exception information indicating that the earlier respective micro-operation will generate an exception, sending, by the VPU to the LSU, a respective commit signal associated with the respective micro-operation. The LSU is configured to only execute a respective micro-operation upon receipt of a respective commit signal.

The processing system may be embodied in hardware on an integrated circuit. There may be provided a method of manufacturing, at an integrated circuit manufacturing system, a processing system. There may be provided an integrated circuit definition dataset that, when processed in an integrated circuit manufacturing system, configures the system to manufacture a processing system. There may be provided a non-transitory computer readable storage medium having stored thereon a computer readable description of a processing system that, when processed in an integrated circuit manufacturing system, causes the integrated circuit manufacturing system to manufacture an integrated circuit embodying a processing system.

There may be provided an integrated circuit manufacturing system comprising: a non-transitory computer readable storage medium having stored thereon a computer readable description of the processing system; a layout processing system configured to process the computer readable description so as to generate a circuit layout description of an integrated circuit embodying the processing system; and an integrated circuit generation system configured to manufacture the processing system according to the circuit layout description. The layout processing system may be configured to determine positional information for logical components of a circuit derived from the integrated circuit description so as to generate the circuit layout description of the integrated circuit embodying the graphics processing system.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows an example processing system for processing load-store instructions;
Figure 2 shows an example process of processing load-store instructions;
Figure 3 shows a computer system in which a processing system is implemented; and
Figure 4 shows an integrated circuit manufacturing system for generating an integrated circuit embodying a processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

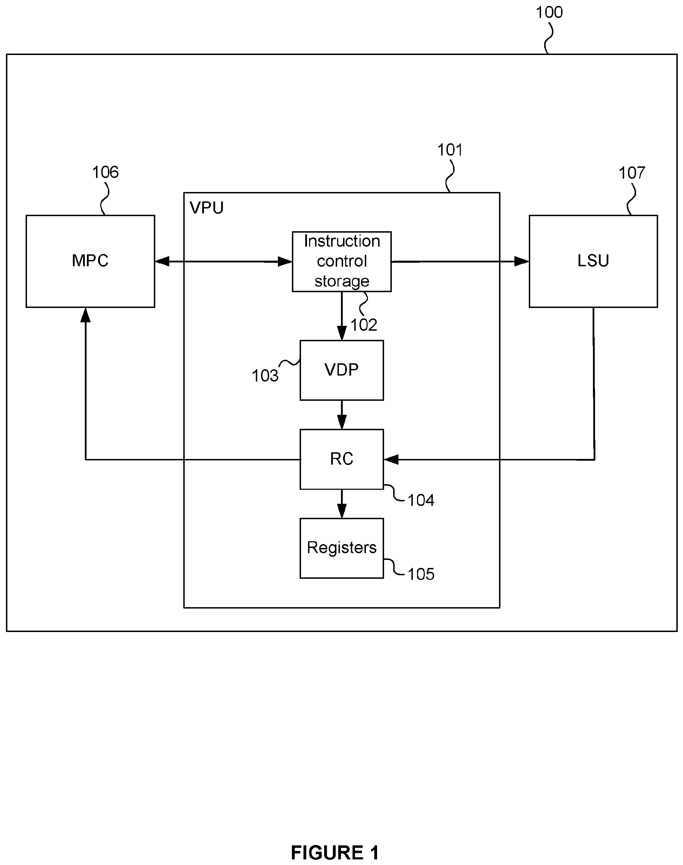

Figure 1 illustrates an example processing system 100 for processing vector processing unit (VPU) instructions. Herein, a VPU instruction refers to any instruction processed (i.e. executed) by a VPU 101. For example, the instruction may be a vector instruction, a scalar floating-point instruction, a vector cryptographic instruction, or a matrix instruction.

The processing system 100 may be or form part of a RISC (e.g. RISC-V) processing system.

The VPU 101 typically includes instruction control storage 102 which contains control and tracking logic for micro-ops of VPU instructions. Some processing systems refer to the instruction control storage 102 as "an operation cache" (OC). Other systems may use a pipeline that is configured to handle the execution of vector instructions, instead of dedicated instruction control storage 102. Either way, the VPU 101 has storage for not-yet-dispatched instructions.

The VPU 101 will also typically include a vector data path (VDP) 103 configured to calculate the result of data-processing VPU instructions, and a "results cache" (RC) 104 configured to store data for VPU instructions which have executed but not yet written back to memory (e.g. one or more registers 105). The VPU 101 may comprise additional components.

The VPU 101 is configured to accept (i.e. receive) decoded VPU instruction control from a main pipeline control (MPC) 106 of a CPU. The MPC 106 is also commonly referred to as a data processing unit (DPU). Any reference to MPC below may be replaced with "control unit" or DPU, unless the context requires otherwise.

The processing system 100 comprises an interface between the VPU 101 and the MPC 106, the interface being configured to pass VPU instructions and data between the VPU 101 and the MPC 106. The VPU 101 is configured to receive decoded instructions from the MPC 106, and then execute the instructions. Execution is primarily performed by reading the vector or floating point register files, sending the data through the VDP 103, then writing the result back to the vector or floating point register file.

The processing system 100 also contains one or more interfaces between the VPU 101 and LSUs 107, the LSUs 107 being configured to perform vector loads and stores, and floating point loads and stores.

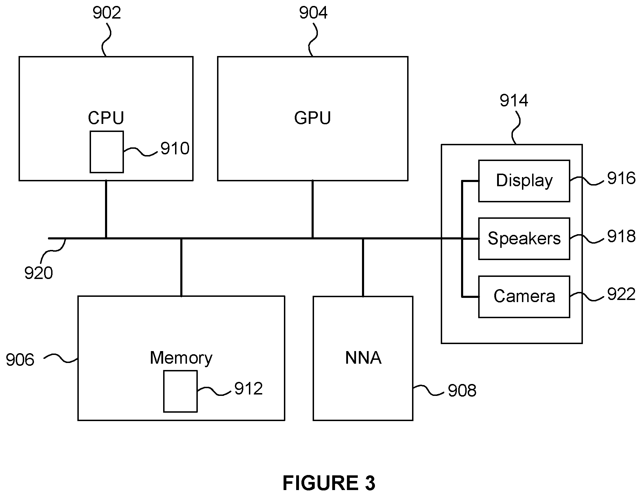

The processing system 100 may also contain an instruction fetch unit (or simply, fetch unit), and an interface between the VPU 101 and the fetch unit. The fetch unit is not shown in Figure 1. The fetch unit is configured to obtain instruction encoding (i.e. encoded versions of instructions, also referred to herein as encoded instructions) from memory, such as memory 906 in Figure 3. In general the memory that holds the encoded instructions may be positioned anywhere within the processing system 100. The fetch unit may also configured to decode encoded versions of instructions, thus revealing the instructions.

The VPU 101, MPC 106 and LSU 107 are all components of a central processing unit (CPU), e.g. CPU 902 shown in Figure 3.

The VPU 101 may, in some situations, run ahead of the MPC 106, meaning that some instructions may have finished executing, and have the result available, before the instruction has been architecturally committed. In this case, the result is written to the result cache 104 and then sent from the result cache 104 into the appropriate register file 105 once the instruction is committed.

The following definitions are used throughout the present disclosure. "Issue" refers to when an instruction is sent from the MPC 107 to the VPU 101. "Dispatch" refers to when the instruction control storage 102 generates a micro-op from an instruction. "Allow" refers to when an instruction or micro-op is allowed to perform actions that may have software observable side effects (e.g. page walks or main memory reads). "Commit" refers to when an instruction or micro-op becomes guaranteed to update architectural state. It cannot do any such update until it's committed. "Execute" refers to when a micro-op produces a result (e.g. a result that can be written to the architectural state once the instruction is committed). "Writeback" refers to when the micro-op or instruction has finished updating architectural state (e.g. register 106) with a result.

VPU instructions are sent from the MPC 106 to the VPU 101 in order. Instructions may be executed and perform architectural updates out of order, both with respect to other MPC instructions, and also with respect to other VPU instructions.

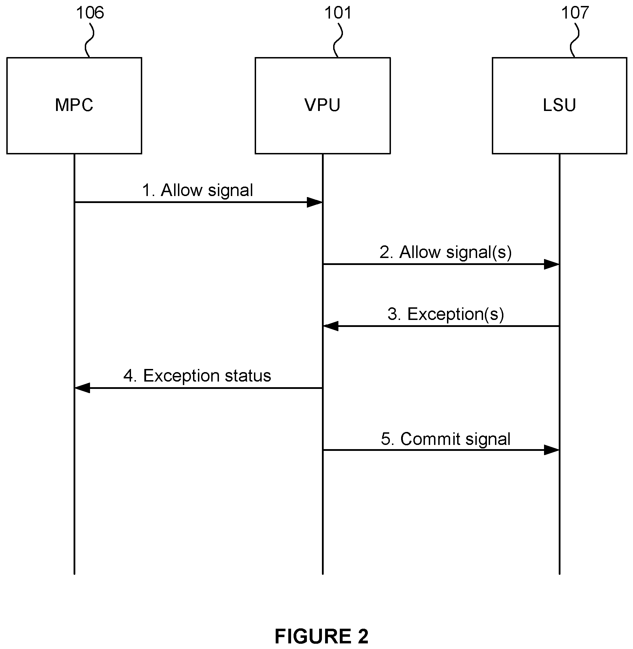

Figure 2 illustrates an example handshaking protocol for processing load-store (LS) instructions by a processing system 100. It should be appreciated that the protocol may include additional, optional steps that are not shown in Figure 2.

The MPC 106 is configured to issue (i.e. send) a LS instruction to the VPU 101. The MPC 106 checks whether there are any reasons, internal to the MPC 106, that are preventing / should prevent the LS instruction from making architectural changes. An example reason may be that an older instruction might get an exception. Another reason may be that an older branch instruction might be "mis-predicted". Mis-prediction occurs when the CPU predicts that a branch would be taken, and has started executed instructions at the target of the branch, but actually the branch is not taken, and the CPU will need to execute instructions that are directly after the branch instead.

The MPC 101 may perform the checks before sending the LS instruction to the VPU 101, or after the LS instruction has been sent to the VPU 101. If the checks pass, the MPC sends an allow signal to the VPU 101.

An instruction identifier may be assigned to the LS instruction and used to associate the allow signal with the LS instruction. The identifier may be assigned by the VPU 101 or the MPC 106. The instruction identifier may be used to associate other signals passed between the MPC 106 and the VPU 101 in relation to the LS instruction.

The VPU 101 is configured to split (i.e. crack) the LS instruction into one or more micro-ops and send the one or more LS micro-ops to the LSU 107. Splitting the LS instruction into the micro-ops may be conditional on receiving the allow signal from the MPC 106. For each micro-op that is sent to the LSU 107, the VPU 101 sends a respective allow signal to the LSU 107. Note that this only occurs if the MPC 106 has sent an allow signal for that instruction to the VPU 101, as described above. The allow signal(s) may be send to the LSU 107 before, after or at the same time as sending the micro-ops.

A micro-op identifier may be assigned to each of micro-op of the LS instruction and used to associate the respective allow signals with the respective micro-ops. The identifiers may be assigned by the VPU 101 or the LSU 107. The micro-op identifiers may be used to associate other signals passed between the VPU 101 and the LSU 107in relation to the micro-ops.

The identifier-based handshaking scheme may also be used to ensure that data is routed to the correct place when being transferred between the units, including the MPC 106, the VPU 101, and the LSU 107.

The LSU 107 then determines whether the micro-ops will generate exceptions. The LSU 107 may check only the micro-ops that have an associated allow signal. That is, the determining/checking whether a micro-op will generate an exception may be conditional on receiving an allow signal for that micro-op. The micro-ops are received in an order from the VPU 101. The LSU 107 may check each micro-op in order and send respective exception information (or 'exception signals') to the VPU 101, where the exception information indicates whether the micro-op will or will not generate an exception. The LSU 107 may stop checking the micro-ops once the first micro-op that will generate an exception is identified. Alternatively, the LSU 107 may check each of the received micro-ops.

The VPU 101 may send an 'exception status' to the MPC 106 based on the information received from the LSU 107. The exception status either indicates that the instruction will generate an exception or will not generate an exception. If the exception status indicates that the instruction will generate an exception, it may include a type and/or location of the exception. Some processing systems (including RISC-V systems) require that when an exception is detected, architectural state (e.g. a control and status register (CSR)) needs to be updated. For example, the architectural state may require information relating to the exception. The MPC 106 may update the architectural state in response to receiving the exception status. Additionally or alternatively, the MPC 106 may prevent all younger instructions than the current instruction from updating architectural state. The MPC 106 may send a request to an instruction fetch unit of the processing system to start executing an exception handler. An exception handler is a piece of software that runs when an exception is detected, instead of the software that would run after the instruction that got an exception. The exception handler is configured to read the system registers to determine what caused the exception, determine what is needed to recover from that exception, if possible, and if not, fail gracefully if the exception cannot be recovered from.

Starting with the earliest micro-op in the order of micro-ops, if a micro-op will not generate an exception and no previous micro-op in the order of micro-ops will generate an exception, and the parent instruction for the micro-op has received an allow from the MPC 106, the VPU 101 sends a commit signal to the LSU 107 for that micro-op. The VPU 101 stops sending commit signals once the above condition fails. That is, commit signals are not sent for any micro-ops that will generate an exception or follow a micro-op that will generate an exception.

If an allowed micro-op later gets an exception from the LSU 107, only the preceding micro-ops are committed. For example, if the VPU 101 sends micro-ops (v1, v2, v3, v4) for execution by the LSU 107 and v2 triggers an exception by the LSU 107, only v1 will be committed to the LSU 107. Micro-ops v3 and v4 are not allowed to update state.

The LSU 107 is configured to only process (i.e. execute) micro-ops that have a commit signal. This means that a micro-op can only make architectural changes, including those that have software-observable side effects, if the LSU 107 receives a commit signal for that micro-op. Upon receipt of a commit signal for a micro-op, the LSU 107 executes the micro-op.

To summarise, the handshake protocol described above is used to control when instructions sent to the VPU 101 can perform architectural updates or actions that might have side effects.

The MPC 106 can send an allow signal for any instructions for which there are no reasons internal to the MPC 106 that might prevent the instruction from being architecturally executed, e.g. there are no older instructions that might get an exception or branch mis-predict. The VPU 101 will send an allow signal to the LSU 107 for each micro-op that is from an instruction that received an allow signal from the MPC 106. An instruction or micro-op must not perform actions that might have observable side effects until it has an allow signal. This is to avoid spectrestyle security holes. For the LSU 107, this means that it will not perform a page walk or main-memory read until the micro-op has an allow signal.

The LSU 107 may send a no-exception signal to the VPU 101 for a micro-op once it has determined that the micro-op will not get a synchronous exception. The VPU 101 may send a no-exception signal to the MPC 106 once it has determined that the instruction will not get an exception. This may involve collating all the exception information for each micro-op from the LSU 107and doing any illegal-instruction checks.

An instruction or micro-op is committed once it's been allowed, and is guaranteed to have no exception. The VPU 101 indicates which micro-ops are committed to the LSU 107. This is because the LSU 107 does not know which micro-ops are part of the same instruction, so it cannot determine itself when a given micro-op has no younger micro-ops with an exception.

Figure 3 shows a computer system in which processing systems described herein may be implemented. The computer system comprises a CPU 902, a GPU 904, a memory 906, a neural network accelerator (NNA) 908 and other devices 914, such as a display 916, speakers 918 and a camera 922. A processing block 910 (corresponding to processing blocks 101) is implemented on the CPU 902. In other examples, one or more of the depicted components may be omitted from the system, and/or the processing block 910 may be implemented on the GPU 904 or within the NNA 908. The components of the computer system can communicate with each other via a communications bus 920. A store 912 is implemented as part of the memory 906.

The processing system of Figures 1 and 2 are shown as comprising a number of functional blocks. This is schematic only and is not intended to define a strict division between different logic elements of such entities. Each functional block may be provided in any suitable manner. It is to be understood that intermediate values described herein as being formed by a processing system need not be physically generated by the processing system at any point and may merely represent logical values which conveniently describe the processing performed by the processing system between its input and output.

The processing system described herein may be embodied in hardware on an integrated circuit. The processing system described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing system configured to perform any of the methods described herein, or to manufacture a processing system comprising any apparatus described herein. An integrated circuit definition dataset may be, for example, an integrated circuit description.

Therefore, there may be provided a method of manufacturing, at an integrated circuit manufacturing system, a processing system as described herein. Furthermore, there may be provided an integrated circuit definition dataset that, when processed in an integrated circuit manufacturing system, causes the method of manufacturing a processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

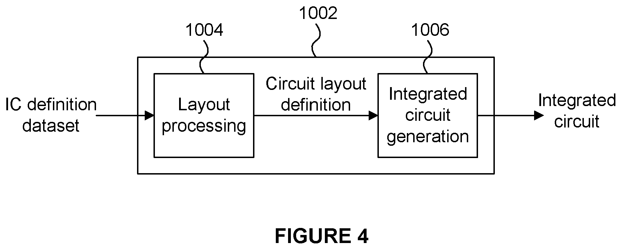

An example of processing an integrated circuit definition dataset at an integrated circuit manufacturing system so as to configure the system to manufacture a processing system will now be described with respect to Figure 4.

Figure 4 shows an example of an integrated circuit (IC) manufacturing system 1002 which is configured to manufacture a processing system as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a processing system as described in any of the examples herein), process the IC definition dataset, and generate an IC according to the IC definition dataset (e.g. which embodies a processing system as described in any of the examples herein). The processing of the IC definition dataset configures the IC manufacturing system 1002 to manufacture an integrated circuit embodying a processing system as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 4 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 4, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer-implemented method of processing instructions by a processing system, wherein the processing system comprises a control unit, a vector processing unit, VPU, and a load-store unit, LSU, wherein the method comprises, for a current instruction to be processed:
determining, by the control unit, that there are no reasons internal to the control unit that are preventing the current instruction from making architectural updates, and in response sending, to the VPU, an allow signal associated with the current instruction;
sending, from the VPU to the LSU, one or more respective micro-operations of the current instruction and one or more respective allow signals associated with the respective micro-operation, wherein the one or more respective micro-operations are sent to the LSU in an order;
for each of a set of the one or more respective micro-operations having an associated respective allow signal, the LSU determining whether the respective micro-operation will generate a respective exception, and sending respective exception information to the VPU, the respective exception information indicating whether the respective micro-operation will generate a respective exception; and
for each respective micro-operation that has i) an associated respective allow signal, ii) respective exception information indicating that the respective micro-operation will not generate an exception, and iii) no earlier respective micro-operations positioned earlier in the order that has respective exception information indicating that the earlier respective micro-operation will generate an exception, sending, by the VPU to the LSU, a respective commit signal associated with the respective micro-operation, wherein the LSU is configured to only execute a respective micro-operation upon receipt of a respective commit signal.

2. The method of claim 1, comprising the LSU executing at least one of the respective micro operations associated with the respective commit signal.

3. The method of claim 2, wherein executing the at least one of the respective micro-operations comprises updating architectural state of the processing system.

4. The method of claim 3, wherein updating architectural state comprises one or more of:
writing data to memory of the processing system, reading data from non-idempotent memory of the processing system, and updating one or more page tables of the processing system.

5. The method of any preceding claim, comprising:
assigning an instruction identifier to the current instruction; and
using the instruction identifier to associate the allow signal with the current instruction.

6. The method of any preceding claim, comprising:
assigning a respective micro-operation identifier to each of the one or more respective micro-operations; and
using the respective micro-operation identifier to associate the respective allow signal with the respective micro-operation.

7. The method of any preceding claim, wherein the set of the one or more respective micro-operations comprises each of the one or more respective micro-operations.

8. The method of any of claims 1 to 6, wherein the LSU determines whether the respective micro-operation will generate a respective exception for each respective micro-operation in the order until a respective exception is determined.

9. The method of any preceding claim, comprising:
in response to determining that one or more respective micro-operations will generate a respective exception, the VPU sending a signal to the control unit informing the control unit that the current instruction will generate an exception.

10. The method of any preceding claim, comprising sending, by the VPU to the control unit, exception status based on the respective exception information, wherein the exception status either indicates a) that none of the one or more respective micro-operations will generate a respective exception, or b) i) at least one of the one or more respective micro-operation will generate a respective exception, and/or ii) an indication of the respective micro-operation positioned earliest in the order that will generate a respective exception.

11. The method of claim 10, wherein the exception status that indicates b) indicates a type and/or location of each respective exception.

12. The method of claim 10 or claim 11, comprising in response to receiving the exception status that indicates b), the control unit performing one or more of the following actions:
updating one or more registers of the processing system with the exception information;
preventing all younger instructions than the current instruction from updating architectural state; and
sending a request to an instruction fetch unit of the processing system to start executing an exception handler.

13. Computer readable code configured to cause the method of any preceding claim to be performed when the code is run.

14. A computer readable storage medium having encoded thereon the computer readable code of claim 13.

15. A processing system comprising a control unit, a vector processing unit, VPU, and a load-store unit, LSU, wherein:
the control unit is configured to determine that there are no reasons internal to the control unit that are preventing a current instruction from making architectural updates, and in response send, to the VPU, an allow signal associated with the current instruction;
the VPU is configured to send one or more respective micro-operations of the current instruction to the LSU in an order, and to send one or more respective allow signals associated with the respective micro-operation to the LSU;
the LSU is configured to determine, for each of a set of the one or more respective micro-operations having an associated respective allow signal, whether the respective micro-operation will generate a respective exception, and send respective exception information to the VPU, the respective exception information indicating whether the respective micro-operation will generate a respective exception;
wherein the VPU is configured to send, for each respective micro-operation that has i) an associated respective allow signal, ii) respective exception information indicating that the respective micro-operation will not generate an exception, and iii) no earlier respective micro-operations positioned earlier in the order that has respective exception information indicating that the earlier respective micro-operation will generate an exception, a respective commit signal associated with the respective micro-operation to the LSU; and
wherein the LSU is configured to only execute a respective micro-operation upon receipt of a respective commit signal associated with the respective micro-operation.
